# EUROPEAN PATENT SPECIFICATION

(11) **EP 0 862 513 B1**
(45) Date of publication and mention of the grant of the patent: **13.06.2001**
(21) Application number: 96928207.8
(22) Date of filing: 16.08.1996
(51) Int. Cl.: C08L 33/14, C08K 3/00, G02B 5/23

(54) **POLYMERIC MATERIALS FOR PHOTOCHROMIC APPLICATIONS**
POLYMERE MATERIALIEN FÜR PHOTOCHROME ANWENDUNGEN
MATERIAUX POLYMERES POUR APPLICATIONS PHOTOCHROMIQUES

(30) Priority: 21.08.1995 US 517325
(43) Date of publication of application: 09.09.1998
(73) Proprietor: INNOTECH, Inc., Roanoke, VA 24012 (US)
(72) Inventor: GUPTA, Amitava, Bethesda, MD 20814 (US); BLUM, Ronald, D., Roanoke, VA 24014 (US); IYER, Venkatramani, S., Roanoke, VA 24019 (US)
(74) Representative: Mercer, Christopher Paul
(86) International application number: US9613302
(87) International publication number: WO9706944

(56) References cited:
- EP-A- 0 222 059
- EP-A- 0 337 695
- EP-A- 0 441 383
- WO-A-96/34735
- US-A- 4 286 957
- US-A- 4 544 572
- US-A- 4 909 963
- US-A- 4 936 995
- US-A- 5 021 196
- US-A- 5 284 884
- US-A- 5 330 686
- PATENT ABSTRACTS OF JAPAN vol. 013, no. 193 (M-822), 9 May 1989 & JP 01 018688 A (MITSUBISHI ELECTRIC CORP), 23 January 1989
- PATENT ABSTRACTS OF JAPAN vol. 016, no. 237 (P-1362), 29 May 1992 & JP 04 051146 A (NIPPON KAYAKU CO LTD), 19 February 1992

## Description

This application is a continuation-in-part of U.S. Serial No. 08/435,126, entitled "Adhesive Photochromic Matrix Layers for use in Optical Articles," filed May 5, 1995, naming Amitava Gupta, Ronald D. Blum and Venkatramani S. Iyer as inventors. This application is also a continuation-in-part of Application Serial No. 08,167,103, entitled "Method and Apparatus for Manufacturing Photochromic Lenses," filed December 15, 1993, naming Amitava Gupta and Ronald Blum as inventors, which is a continuation-in-part of Application Serial No. 08/165,056, entitled "Method and Apparatus for Manufacturing Photochromic Lenses," filed December 10, 1993, also naming Amitava Gupta and Ronald Blum as inventors.

### FIELD OF THE INVENTION

This invention relates to thin layers of materials which function as effective carriers for photochromic additives, can be attached to many types of optical substrates (including ophthalmic lenses, semifinished lens blanks, optical preforms, goggles, safety glasses, windows, and windshields), and can be encapsulated between two layers of such optical products, at least one of which is transparent to ultraviolet radiation.

### BACKGROUND OF THE INVENTION

It is often desirable to incorporate photochromic properties into optical products which are used both in sunlight and in darkness. This allows such products to develop a dark tint that serves to reduce outdoor glare during exposure to sunlight, while also allowing them to turn clear when sunlight is not present. A combination of three or more photochromic additives, each with a colored state absorbing in a particular part of the visible wavelength range (400- 750 NM) is usually used to obtain a neutral gray or brown tint.

While photochromic ophthalmic lenses have been successfully commercialized for many years, photochromic versions of other optical products, such as windshields, windows, goggles and safety glasses, are not yet in common use, because it is difficult and expensive to manufacture photochromic versions of these products.

Certain constraints also have to be imposed on the physical properties of materials, particularly plastic materials, in order to enable photochromic additives incorporated in them to perform their intended function (i.e., switch from a clear state to a dark state in presence of sunlight, and return to a clear state when exposure to sunlight ends). These constraints compromise the structural and optical performance of these materials, and can render them unsuitable for their intended applications.

It is useful to review the mechanism by which photochromic additives are believed to perform, in order to further understand the deficiencies of currently available photochromic materials, and to understand the design rationale for layers bearing photochromic additives.

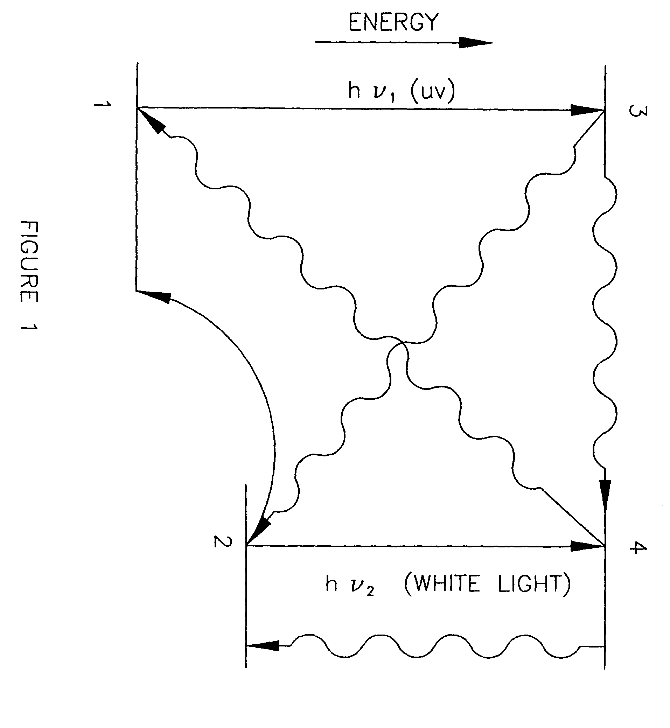

Photochromic molecules exist in two ground state configurations ("doublet ground states"), one of which does not absorb visible radiation at any significant level, the other of which is able to absorb visible radiation strongly. Each of these ground state configurations has a corresponding electronically excited state, as shown in Figure 1. The four state diagram of a typical organic photochromic molecule shown in Figure 1 includes two ground states: a colorless state, 1, and a colored state, 2, which are thermally interconvertible. For certain photochromic materials, state 2 can be converted to state 1 through absorption of visible light. An excited state 3 formed by absorption of ultraviolet light by ground state 1 decays to form an excited state 4 and from excited state 4 decays to ground state 2. The excited state 3 also directly decays to ground state 2 (the activating process). The ground state 2 forms the excited state 4 which returns to both ground state 1 and ground state 2 on deactivation (the bleaching process), as shown in Figure 1. The activated conversion of ground state 2 into ground state 1 introduces a temperature dependence into the dynamic range of the photochromic response of organic photochromic materials. Thus, the higher the temperature, the faster the conversion of ground state 2 into ground state 1, and the equilibrium population of ground state 2 decreases relative to the population of ground state 1. Accordingly, upon activation, the higher the temperature, the more photochromic additive exists in the colorless form 1.

Raising the temperature barrier between ground state 2 and ground state 1 slows down the rate of conversion of ground state 2 into ground state 1, and hence lessens the reduction of the photochromic response ("Activation Level") on raising the temperature. At the same time, however, it slows down the speed of switching of the photochromic additive to the transparent state once it is removed from sunlight exposure.

The photochromic materials available in the state of the art, therefore, represent a compromise between the switching speed (measured as time required for the photochromic material to return to the colorless form when solar exposure is terminated, also referred to as the rate of the bleaching process) and the temperature dependence of the dynamic range of the photochromic response (measured by the population of the colored form relative to the colorless form at thermal equilibrium when being exposed to solar or ultraviolet radiation at any particular temperature, also referred to as the level of activation).

For example, U.S. Patent No. 5,110,881, issued to McBain, describes a plastic material in which this trade-off is shifted towards a better level of activation at a higher temperature, but the resulting switching (bleaching) rate is more than 5 minutes at 72°F (22·2°C), measured as T_{0.5}, the time needed to regain 50% of the optical transmission lost when exposed to sunlight or ultraviolet radiation ("Plastic Photochromic Eyewear: A Revolution", C.N. Welch and J.C.Crano, PPG Industries Inc.)

A third deficiency of currently available photochromic materials is that such materials are generally made by diffusing or infusing ("imbibing") photochromic additives into bulk plastic materials, or by incorporating the photochromic additives into a monomer or monomers, and subsequently polymerizing the monomer formulation to form the bulk plastic material (see, e.g., U.S. Patent No. 4,909,963 issued to Kwak and Chen, U.S. Patent No. 4,637,698 issued to Kwak and 8Hurditch, and U.S. Patent No. 5,185,390 issued to Fischer).

### SUMMARY OF THE INVENTION

In view of the above, it is an object of this invention to develop plastic materials which incorporate photochromic additives in which the speed of switching is maintained at a high level, while the level of photochromic response is rendered relatively insensitive to temperature changes. It is a further object of this invention to develop optical products (including but not limited to ophthalmic lenses, goggles, safety glasses, windows, and windshields) incorporating these materials that are simple and inexpensive to make and whose structural and optical performance are not significantly compromised.

According to an embodiment of the invention, a polymeric material comprising main chain ether groups or side chain alkoxylated groups is provided that is effective as a carrier of photochromic additives. The polymeric material has a glass transition temperature of at least 140°F (60°C) and a cross link density of 3 to 8 moles per liter, more preferably 3 to 6 moles per liter. The polymeric material preferably comprises one or more polymerized monomers selected from the group consisting of one or more mono- or multi-functional acrylates or methacrylates. Examples include bisphenol A derivatives of mono- or multi-functional acrylates or methacrylates; aromatic carbonates of mono- or multi-functional acrylates or methacrylates; aliphatic carbonates of mono- or multi-functional acrylates or methacrylates; and allyl and vinyl derivatives of mono- or multi-functional acrylates or methacrylates. Further examples include polyethylene glycol diacrylates, ethoxylated bisphenol A diacrylates, 2-phenoxyethyl methacrylates, alkoxylated trifunctional aliphatic acrylates, alkoxylated aliphatic diacrylate esters, tetrahydrofurfuryl acrylates, alkoxylated trifunctional acrylates, and alkoxylated difunctional acrylate esters.

According to another embodiment of the present invention, resin formulations containing monomers which can be cured to form polymeric materials, such as those discussed above, are provided. Examples of such monomers are discussed above. The resin formulations of the present invention preferably comprise either a photoinitiator or a thermal initiator. Preferred photoinitiators include bisdimethoxybenzoyl trimethylpentyl phosphine oxide, 1-hydroxy cyclohexyl phenyl ketone, and 2-hydroxy, 2-methyl, 1-phenyl propane. Preferred thermal initiators include organic peroxides, hydroperoxides, percarbonates, peracetates and azo derivatives. The resin formulations of the present invention can also include additional additives, such as antioxidants. Preferred antioxidants include thiodiethylene bis(hydrocinnamide) and bis (1,2,2,6,6,-pentamethyl-4-piperidyl sebacate). One or more photochromic additives can also be included in the resin formulations of the present invention. Preferred photochromic additives include
spiro(indolino)naphthoxazines,
spiro(indolino)pyridobenzoxazines,
spiro(benzindolino)naphthoxazines, and octamethyl stilbene.

Optical products can be made from either the above polymeric material or the above resin. Optical products appropriate for the practice of the present invention include uncorrected lenses, ophthalmic lenses, semifinished lens blanks, optical preforms, goggles, safety glasses, windows, and windshields.

Other embodiments of the present invention relate to methods of forming a polymeric material that is impregnated with a photochromic additive. According to a first embodiment, the photochromic additive is incorporated into the polymeric material by adding the photochromic additive to a monomer formulation before it is polymerized.

According to a second embodiment, the photochromic additive is incorporated into the polymeric material by diffusing the photochromic additive material into the polymeric material. This can be accomplished in a variety of ways. For example, the photochromic additive can be incorporated into the polymeric material by immersing it into a solution of the photochromic additives in a chemically inert solvent, by spraying or spin coating the polymeric material with a solution of the photochromic additives in a chemically inert solvent, by repeatedly providing a surface layer of polymeric material and subsequently incorporating the photochromic additive into the surface layer of polymeric material, and so forth.

The polymeric material, either with or without the incorporated photochromic additive, can be adhered to an optical product, for example, by an interfacial region composed of an interpenetrating network, by an adhesive layer, and so forth.

Another way by which the polymeric material incorporating the photochromic additive can be included in an optical product is by forming the polymeric material incorporating the photochromic additive as a solid powder, suspending the solid powder in a liquid, and applying the suspended powder to an optical product. Yet another way of including the polymeric material incorporating the photochromic additive into an optical product is by partially polymerizing the polymeric material; loading the partially polymerized polymeric material with the photochromic additives; dispersing the loaded, partially polymerized polymeric material in a carrier fluid; and applying the carrier fluid with the dispersed, loaded, partially polymerized polymeric material onto an optical product.

Still other objects and advantages of the invention and alternative embodiments will readily become apparent to those skilled in the art, particularly after reading the detailed description and claims set forth below.

### BRIEF DESCRIPTION OF THE DRAWINGS

Figure 1 is a four state diagram of a typical organic photochromic molecule.

### DETAILED DISCUSSION OF THE INVENTION

Referring to the above discussion in connection with Figure 1, but without wishing to be held to any particular theory or theories of operation, it is clear that the rate of conversion of ground state 2 into ground state 1 controls the level of activation as well as the switching (bleaching) speed. Thus, the faster the conversion of ground state 2 into ground state 1, the lower the level of activation, but the faster the bleaching rate. For slow bleaching systems, the level of activation is controlled by the second process of conversion of ground state 2 into ground state 1, i.e., through absorption of visible light by ground state 2, and subsequent deactivation to form 1, as shown in Figure 1. For such slow switching materials, the level of activation approaches a maximum, but the bleaching rate is slow.

In several photochromic molecules, the bleaching rate provided by the photochromic molecule itself is much faster than the bleaching rate permitted by the segmental rotational rates of the plastic matrix constituting the optical product. Therefore, the bleaching rate is very largely determined by the nature of the matrix, in particular its segmental rotational rate. As a result, the level of activation is also largely determined by the nature of the matrix for these photochromic molecules. Such photochromic molecules are disclosed, for example, in U.S. Patent No. 5,349,065, issued to Tanaka, Tanaka and Kida, or U.S. Patent No. 5,021,196, issued to Crano, Kwiatkowski and Hurditch. Plastic products incorporating such molecules exhibit matrix dependent bleaching rates and activation levels.

A series of polymeric matrices were developed by the present inventors for use in conjunction with such photochromic molecules that are capable of achieving high levels of activation at temperatures up to and exceeding 100°F (37·8°C), and still retain bleaching rates (T_{0.5}) of less than 1 minute at room temperatures, 70°-90°F (21·1°-32·2°C).

A key feature of the polymeric matrices of the present invention is that the barrier to conversion of ground state 2 into ground state 1 (Figure 1), presented by the polymeric segments, contains a component which is weakly dependent on temperature, i.e., it remains nearly constant over the temperature range of 70°F - 100°F (21·1°C-37·8°C). This is accomplished by selecting appropriate monomers which, after curing, contain constituents (either at side chains or at main chains) capable of undergoing rotation with a very low activation energy (less than 40 kJ/Mol). A combination of such constituents is provided so that the polymeric network has several degrees of freedom of rotational motion available to it. At the same time the network is cross linked to ensure that the absolute magnitude of the rotational frequency remains restricted. This is done to ensure that the rate of conversion of ground state 2 into ground state 1 does not become excessively fast. Otherwise, the level of activation will become unacceptably low at the upper limit of the target temperature range (40·6°C) (105°F). Generally speaking, the segmental mobility of polymeric matrices increases 5 fold or more when the ambient temperature is at or above its glass transition temperature. Accordingly, all matrices are formulated to have glass transition temperature well above the target temperature range (20°F (-6·7°C) or more), so that only local group or side chain motions are available to stimulate the conversion of ground state 2 into ground state 1 (Figure 1).

It was found that when monomers containing main or side chain-ether groups (embodied in certain ethoxylated or propoxylated derivatives or methoxy substituents present as side chains) were used to formulate the polymeric matrix for incorporation of photochromic additives, the matrices permitted rapid conversion of ground state 2 into ground state 1 in the absence of cross linking, or at low levels of cross link density. Such a matrix provided rapid bleaching rates, but low levels of activation at or near the upper limit of the target temperature range. As the cross link density was increased, the conversion rate of ground state 2 into ground state 1 was slowed down, simultaneously increasing the activation level at the temperature range 90°-100°F (32·2°-37·8°C). A range of cross link density was found within which the activation level remained approximately constant (varying less than 30%) over a relatively wide temperature ranges, 80°-100°F (26·7-37·8°C), leaving the switching speed (bleaching rate) also approximately unchanged at 30-45 seconds. It is believed that the polymeric matrices within this range of cross link densities and concentrations of ether groups present as alkoxy groups or side chains provide an optimum number of rotational degrees of freedom with low temperature dependence to a photochromic molecule incorporated in the matrix.

Thus, a combination of polyethylene glycol (400) diacrylate, ethoxylated bisphenol A diacrylate, 2-phenoxyethyl methacrylate, either used as a three component mixture or mixed with bisallyl ethylene carbonate, provide independent control of crosslink density and glass transition temperature of the resulting polymeric matrices, in addition to providing both main chain ether groups and side chain alkoxylated groups in the resulting network.

In addition to the monomers listed above, it is possible to use a series of polyethylene glycol diacrylates of different molecular weights, alkoxylated trifunctional aliphatic acrylates (such as SR9008, available from Sartomer Corp), and alkoxylated aliphatic diacrylate esters (such as SR9209, available from Sartomer Corp). In addition, other oligomeric mono- or multi-functional acrylates or methacrylates may also be used, provided that the range of cross link density does not fall outside of 2-8 moles per liter, preferably 2.5-6 moles per liter. Preferable candidates among acrylates and methacrylates are those which bear either aliphatic or aromatic ether linkages on the main chain, such as Bisphenol A derivatives, or aromatic carbonates derived thereof, aliphatic carbonates, as well as side chain substitutions bearing alkoxy linkages. In addition, allyl and vinyl derivatives may be used, such as styrene, substituted styrenes, or bisallyl carbonate, or derivatives thereof.

The monomer formulation was typically photopolymerized using photoinitiators such as bisdimethoxybenzoyl trimethylpentyl phosphine oxide (BAPO, available from Ciba Geigy Corp), 1-Hydroxy cyclohexyl phenyl ketone (Irgacure 184, available from Ciba Geigy Corp), or 2-hydroxy, 2-methyl, 1-phenyl propane (Durcure 1173, available from Radcure Corp). Alternatively the monomer formulation may be thermally polymerized using an organic peroxide, hydroperoxide, percarbonate, peracetate, or an azo derivative as a thermal polymerization initiator. Examples are benzoyl peroxide, 2,2' azobisisobutyronitrile, or diisopropyl percarbonate.

Antioxidants, such as thiodiethylene bis(hydrocinnamide) (Irganox 1035, available from Ciba Geigy Corp) or bis (1,2,2,6,6,-pentamethyl-4-piperidyl sebacate) (Tinuvin 292, available from Ciba Geigy Corp), may also be included in the monomer formulation.

Table 1 shows some typical formulations, and their glass transition temperatures. The formulations are custom developed for a given substrate material (e.g., an optical product made of CR-39 (Trademark of PPG Corp), polycarbonate of bisphenol A, or a polyurethane). In each case, the monomers are selected to develop strong bonding and compatibility with the substrate to which this matrix is to be applied.

**Table 1 -**

| List of Preferred Formulations for Certain Substrates | | | | |
|---|---|---|---|---|
| FORMULATION | MONOMERS | WEIGHT RATIOS (%) | GLASS TRANSITION TEMP | SUBSTRATE |
| 1 | DEG-BAC | 70 | 80°C | CR-39 |
| | 9008 | 4 | | |
| | PEGDA | 9 | (176°F) | |
| | 9209 | 15 | | |
| | 184 | 2 | | |
| 2 | DEG-BAC | 70 | 65°C | CR-39 |
| | PEGDA | 15 | | |
| | 9209 | 13 | (149°F) | |
| | 184 | 2 | | |
| 3 | DEG-BAC | 50 | 80°C | CR-39 |
| | THFA | 25 | | |
| | 9209 | 23 | (176°F) | |
| | 184 | 1.85 | | |
| | TIN 1130 | 0.1 | | |
| | TIN 292 | 0.05 | | |
| 4 | PEGDA | 15 | 90°C | POLYCARBONATE |
| | EBDA | 84.5 | | |
| | 184 | 0.5 | (194°F) | |
| 5 | PEGDA | 17.5 | 81°C | CR-39 |
| | DEG-BAC | 70 | | |
| | PEMA | 13.5 | (178°F) | |
| | 184 | 2.5 | | |

Definition of terms: DEG-BAC: Diethylene Glycol Bisallyl Carbonate; PEGDA: Polyethylene Glycol Diacrylate; THFA: Tetrahydrofurfuryl Acrylate, EBDA: Ethoxylated Bisphenol A Diacrylate; PEMA: 2-Phenoxyethyl Methacrylate, 9008: Alkoxylated Trifunctional Acrylate, 9209: Alkoxylated Difunctional Acrylate Ester, 184: 1-Hydroxycyclohexyl Phenyl Ketone, TIN 1130: 2-Hydroxyphenyl Benzotriazole, TIN 292: Bis(1,2,2,6,6-Pentamethyl-4-Piperidinyl)Sebacate.

These polymeric matrices can be loaded with the photochromic additives. Preferred photochromic molecules for the practice of the present invention include spiro (indolino)naphthoxazines,
spiro(indolino)pyridobenzoxazines,
spiro(benzindolino)naphthoxazines, and octamethyl stilbene.

Several means are available for loading the photochromic additives into the polymeric matrices. For example, the photochromic additives can be added to the monomer formulation prior to polymerization, provided that the additives survive the conditions of polymerization. The matrix can be imbibed with the photochromic additives, either by slow diffusion, or by taking the matrix to a temperature above its glass transition temperature, then immersing it for a short time into a solution of the photochromic additives in a chemically inert solvent.

Alternatively, the matrix may be sprayed or spin coated with a solution of the photochromic additive, the solvent evaporated off, then the polymeric matrix may be heated to allow the photochromic additive thus deposited on the surface to diffuse inward, and eventually develop a gradient of concentration. The process of forming the matrix layer and addition of photochromic additives may be repeated several times in order to build up an overall thickness appropriate for the contemplated application.

The polymeric matrices described herein can be applied to optical products in many ways. For example, the polymeric matrix can be developed as a conformal layer bonded to the optical product via an interface region composed of an interpenetrating network. In another method of application of the polymeric matrix to the optical product, the polymeric matrix is produced in the form of a thin sheet which is adhesively bonded to the optical product of interest. In yet another method of application of the polymeric matrix to the optical product, the polymeric matrix material bearing the photochromic additive may be formed as a solid powder, then suspended in a liquid in order to dip, spray, spin or brush coat the optical product. The matrix material will not dissolve in any solvent because it is cross linked. In yet another method of application of the polymeric matrix to the optical product, the matrix material may be partially polymerized to form a sticky, viscous material, loaded with the photochromic additives, dispersed in a carrier fluid, then dip, spray, spin or brush coated onto the optical product.

Still other embodiments will become immediately apparent to those skilled in the art upon reading this specification and the claims below.

## Claims

1. A polymeric material, for use as a carrier of photochromic additives, comprising main chain ether groups or side chain alkoxylated groups, said polymeric material having a glass transition temperature of at least 140°F (60°C) and a cross link density of 3 to 8 moles per liter.

2. The polymeric material of claim 1, wherein said polymeric material comprises one or more polymerized monomers selected from the group consisting of mono- or multi-functional acrylate or methacrylates.

3. The polymeric material of claim 2, wherein said monomers are selected from the group consisting of Bisphenol A derivatives of mono- or multi-functional acrylates or methacrylates; aromatic carbonates of mono- or multi-functional acrylates or methacrylates; aliphatic carbonates of mono- or multi-functional acrylates or methacrylates; and allyl and vinyl derivatives of mono- or multi-functional acrylates or methacrylates.

4. The polymeric material of claim 2, wherein said polymeric material comprises one or more polymerized monomers selected from the group consisting of
polyethylene glycol diacrylates.
ethoxylated bisphenol A diacrylates,
2-phenoxyethyl methacrylates,
alkoxylated trifunctional aliphatic acrylates,
alkoxylated aliphatic diacrylate esters,
tetrahydrofurfuryl acrylates,
alkoxylated trifunctional acrylates, and
alkoxylated difunctional acrylate esters.

5. A resin formulation comprising one or more photochromic additives and one or more monomers selected from (a) monomers selected from the group consisting of mono- or multi-functional acrylates or methacrylates and (b) monomers which, when polymerized form a polymeric material comprising main chain ether groups, said resin formulation having a glass transition temperature of at least 140°F (60°C) and a cross link density of 3 to 8 moles per liter upon polymerization.

6. The resin formulation of claim 5, wherein said monomers are selected from two or more monomers of the group consisting of mono- or multi-functional acrylates or methacrylates.

7. The resin formulation of claim 6, wherein said monomers are selected from two or more monomers of the group consisting of Bisphenol A derivatives of mono- or multi-functional acrylates or methacrylates; aromatic carbonates or mono- or multi-functional acrylates or methacrylates; aliphatic carbonates of mono- or multi-functional acrylates or methacrylates; and allyl and vinyl derivatives of mono- or multi-functional acrylates or methacrylates.

8. The resin formulation of claim 6, wherein said monomers are selected from two or more monomers of the group consisting of
polyethylene glycol diacrylates.
ethoxylated bisphenol A diacrylates,
2-phenoxyethyl methacrylates,
alkoxylated trifunctional aliphatic acrylates,
alkoxylated aliphatic diacrylate esters,
tetrahydrofurfuryl acrylates,
alkoxylated trifunctional acrylates, and
alkoxylated difunctional acrylate esters.

9. A method of forming a polymeric material impregnated with a photochromic additive comprising:
providing a polymeric material comprising main chain ether groups or side chain alkoxylated groups, said polymeric material having a glass transition temperature of at least 140°F (60°C) and a cross link density of 3 to 8 moles per liter;
providing a photochromic additive;
incorporating said photochromic additive into said polymeric material.

10. An optical product selected from the group consisting of uncorrected lenses, ophthalmic lenses, semifinished lens blanks, optical preforms, goggles, safety glasses, windows, and windshields, said optical product comprising the polymeric material of claim 1.

## Patentansprüche

1. Polymeres Material zur Verwendung als ein Träger von photochromen Zusätzen, umfassend Hauptketten-Ethergruppen oder alkyloxylierte Seitenkettengruppen, wobei das polymere Material eine Glas -Umwandlungstemperatur von mindestens 60°C (140°F) und eine Vernetzungsdichte von 3 bis 8 Mol pro Liter hat.

2. Polymeres Material nach Anspruch 1, dadurch gekennzeichnet, daß das polymere Material ein oder mehr polymerisierte Monomere umfaßt, die ausgewählt sind aus der Gruppe bestehend aus mono- oder multifunktionellen Acrylaten oder Methacrylaten.

3. Polymeres Material nach Anspruch 2, dadurch gekennzeichnet, daß die Monomere ausgewählt sind aus der Gruppe bestehend aus Bisphenol A Derivaten von mono- oder multifunktionellen Acrylaten oder Methacrylaten; aromatischen Carbonaten von mono- oder multifunktionellen Acrylaten oder Methacrylaten; aliphatischen Carbonaten von mono- oder multifunktionellen Acrylaten oder Methacrylaten; und Allyl- und Vinyl-Derivaten von mono- oder multifunktionellen Acrylaten oder Methacrylaten.

4. Polymeres Material nach Anspruch 2, dadurch gekennzeichnet, daß das polymere Material ein oder mehr polymerisierte Monomere umfaßt, die ausgewählt sind aus der Gruppe
bestehend aus Polyethylenglycoldiacrylaten,
ethoxylierten Bisphenol A Diacrylaten,
2-Phenoxyethylmethacrylaten,
alkoxylierten trifunktionellen aliphatischen Acrylaten,
alkoxylierten aliphatischen Diacrylsäureestern,
Tetrahydrofurfurylacrylaten,
alkoxylierten trifunktionellen Acrylaten, und
alkoxylierten difunktionellen Acrylsäureestern.

5. Harzformulierung, umfassend ein oder mehrere photochrome Additive und ein oder mehrere Monomere, ausgewählt aus (a) Monomeren, die ausgewählt sind aus der Gruppe bestehend aus mono- oder multifunktionellen Acrylaten oder Methacrylaten, und (b) Monomeren, die, wenn polymerisiert, ein polymeres Material umfassend Hauptketten-Ethergruppen bilden, wobei die Harzformulierung nach Polymerisation eine GlasUmwandlungstemperatur von wenigstens 60°C (140°F) und eine Vernetzungsdichte von 3 bis 8 Mol pro Liter hat.

6. Harzformulierung nach Anspruch 5, dadurch gekennzeichnet, daß die Monomere aus zwei oder mehr Monomeren ausgewählt sind aus der Gruppe bestehend aus mono- oder multifünktionellen Acrylaten oder Methacrylaten.

7. Harzformulierung nach Anspruch 6, dadurch gekennzeichnet, daß die Monomere aus zwei oder mehr Monomeren ausgewählt sind aus der Gruppe bestehend aus Bisphenol A Derivaten von mono- oder multifunktionellen Acrylaten oder Methacrylaten; aromatischen Carbonaten von mono- oder multifunktionellen Acrylaten oder Methacrylaten; aliphatischen Carbonaten von mono- oder multifunktionellen Acrylaten oder Methacrylaten; und Allyl- und Vinyl-Derivaten von mono- oder multifunktionellen Acrylaten oder Methacrylaten.

8. Harzformulierung nach Anspruch 6, dadurch gekennzeichnet, daß die Monomere ausgewählt sind aus zwei oder mehr Monomeren der Gruppe bestehend aus
Polyethylenglycoldiacrylaten,
ethoxylierten Bisphenol A Diacrylaten,
2-Phenoxyethylmethacrylaten,
alkoxylierten trifunktionellen aliphatischen Acrylaten,
alkoxylierten aliphatischen Diacrylsäureestern,
Tetrahydrofurfurylacrylaten,
alkoxylierten trifunktionellen Acrylaten, und
alkoxylierten difunktionellen Acrylsäureestern.

9. Verfahren zur Herstellung eines mit einem photochromen Additiv imprägnierten polymeren Materials, umfassend:
zur Verfügung stellen eines polymeren Materials umfassend Hauptketten-Ethergruppen
oder alkoxylierte Seitenketten, wobei das polymere Material eine GlasUmwandlungstemperatur von 60°C (140°F) und eine Vernetzungsdichte von 3 bis 8 Mol pro Liter hat;
zur Verfügung stellen eines photochromen Additivs;
inkorporieren des photochromen Additivs in das polymere Material.

10. Optisches Produkt, ausgewählt aus der Gruppe bestehend aus unkorrigierten Linsen, augenoptischen Linsen, halbfertigen Linsenrohlingen, optischen Vorformen, Schutzbrillen, Sicherheitsgläsern, Fenstergläsern und Windschutzscheiben, wobei das optische Produkt das polymere Material nach Anspruch 1 umfaßt.

## Revendications

1. Polymère pour utilisation comme support d'additifs photochromiques comprenant des groupes éther de chaîne principale ou des groupes alcoxylés de chaîne latérale, ledit polymère ayant une température de transition vitreuse d'au moins 60°C (140°F) et une densité de réticulation de 3 à 8 moles par litre.

2. Polymère selon la revendication 1, dans lequel ledit polymère comprend un ou plusieurs monomères polymérisés choisis parmi les acrylates ou méthacrylates mono ou multi fonctionnels.

3. Polymère selon la revendication 2, dans lequel lesdits monomères sont choisis parmi les dérivés de bisphénol A des acrylates ou méthacrylates mono ou multifonctionnels, les carbonates aromatiques des acrylates ou méthacrylates mono ou multifonctionnels, les carbonates aliphatiques des acrylates ou méthacrylates mono ou multifonctionnels et les dérivés allyliques et vinyliques des acrylates ou méthacrylates mono ou multifonctionnels.

4. Polymère selon la revendication 2, dans lequel ledit polymère comprend un ou plusieurs monomères polymérisés choisis parmi les diacrylates de polyéthylène-glycol, les diacrylates de bisphénol A éthoxylés, les 2-phénoxyéthyl-méthacrylates, les acrylates aliphatiques trifonctionnels alcoxylés, les esters diacrylates aliphatiques alcoxylés, les acrylates de tétrahydrofurfuryle, les acrylates trifonctionnels alcoxylés et les esters acrylates difonctionnels alcoxylés.

5. Formulation de résine comprenant un ou plusieurs additifs photochromiques et un ou plusieurs monomères choisis parmi (a) les monomères choisis parmi les acrylates ou méthacrylates mono ou multifonctionnels et b) les monomères qui, quand on les polymérise, forment un polymère comprenant des groupes éther de chaîne principale, ladite formulation de résine ayant une température de transition vitreuse d'au moins 60°C (140°F) et une densité de réticulation de 3 à 8 moles par litre lors de la polymérisation.

6. Formulation de résine selon la revendication 5, dans laquelle lesdits monomères sont choisis parmi deux ou plusieurs monomères du groupe consistant en acrylates ou méthacrylates mono ou multifonctionnels.

7. Formulation de résine selon la revendication 6, dans laquelle lesdits monomères sont choisis parmi deux ou plusieurs monomères du groupe consistant en dérivés de bisphénol A des acrylates ou méthacrylates mono ou multifonctionnels, carbonates aromatiques des acrylates ou méthacrylates mono ou multifonctionnels, carbonates aliphatiques des acrylates ou méthacrylates mono ou multifonctionnels et dérivés allyliques et vinyliques des acrylates ou méthacrylates mono ou multifonctionnels.

8. Formulation de résine selon la revendication 6, dans laquelle lesdits monomères sont choisis parmi deux ou plusieurs monomères du groupe consistant en diacrylates de polyéthylène-glycol, diacrylates de bisphénol A éthoxylés, 2-phénoxyéthyl-méthacrylates, acrylates aliphatiques trifonctionnels alcoxylés, esters diacrylates aliphatiques alcoxylés, acrylates de tétrahydrofurfuryle, acrylates trifonctionnels alcoxylés et esters acrylates difonctionnels alcoxylés.

9. Procédé de formation d'un polymère imprégné d'un additif photochromique comprenant la fourniture d'un polymère comprenant des groupes éther de chaîne principale ou des groupes alcoxylés de chaîne latérale, ledit polymère ayant une température de transition vitreuse d'au moins 60°C (140°F) et une densité de réticulation de 3 à 8 moles par litre; la fourniture d'un additif photochromique ; l'incorporation dudit additif photochromique dans ledit polymère.

10. Produit optique choisi parmi les lentilles non corrigées, les lentilles ophtalmiques, les ébauches de lentilles semi-finies, les préformes optiques, les lunettes de protection, les verres de sécurité, les fenêtres et les parebrises, ledit produit optique comprenant la matière polymère selon la revendication 1.
